# EUROPÄISCHE PATENTSCHRIFT

(11) **EP 1 595 318 B1**
(45) Veröffentlichungstag und Bekanntmachung des Hinweises auf die Patenterteilung: **27.12.2006**
(21) Anmeldenummer: 04704194.2
(22) Anmeldetag: 22.01.2004
(51) Int. Cl.: H02G 3/22

(54) **KABELDURCHFÜHRUNG**
WIRE FEEDTHROUGH
PASSAGE DE CABLES

(30) Priorität: 20.02.2003 DE 10307432; 16.09.2003 DE 10343056
(43) Veröffentlichungstag der Anmeldung: 16.11.2005
(73) Patentinhaber: Murrplastik Systemtechnik GmbH, 71570 Oppenweiler (DE)
(72) Erfinder: HÖLZL, Silke, 60318 Frankfurt (DE); FUNK, Rainer, 71543 Wüstenrot (DE)
(74) Vertreter: Reule, Hanspeter
(86) Internationale Anmeldenummer: PCT/EP2004/000478
(87) Internationale Veröffentlichungsnummer: WO 2004/075366

(56) Entgegenhaltungen:
- WO-A-97/36355
- DE-A- 4 105 117
- DE-U- 7 607 248

## Beschreibung

Die Erfindung betrifft eine Vorrichtung zum Abdecken und Abdichten eines zur Durchführung von Kabeln bestimmten Wanddurchbruchs beispielsweise in einem Schaltschrank. (Siehe WO-A-97/36 355). Bekannte Vorrichtungen dieser Art weisen einen am Durchbruchrand der Wand befestigbaren Rahmen und mehrere in Rahmenöffnungen lösbar einsetzbare und dort fixierbare Tüllen aus elastomerem Material auf. Zumindest ein Teil der Tüllen ist mit mindestens einer über einen elastisch aufweitbaren Randschlitz radial von außen zugänglichen Durchgangsöffnung für ein Kabel versehen.

Vorrichtungen dieser Art dienen dazu, mit Steckeinrichtungen oder dergleichen versehene Kabel in einen Schaltschrank einzuführen, ohne dass die Steckeinrichtungen von den Kabeln gelöst werden müssen. Die Vorrichtungen haben außerdem die Aufgabe, den Wanddurchbruch nach dem Einführen der Kabel abzudecken und abzudichten. Der Wanddurchbruch ist meist rechteckig ausgebildet und so groß, dass die Kabel mit den Steckeinrichtungen eingeführt werden können.

Es sind Kabeldurchführungen bekannt (DE-A-4434202, WO99106747), deren Rahmen aus mehreren, sich zu einem Gesamtrahmen ergänzenden Rahmenteilen aus starrem Kunststoffmaterial bestehen. Die Rahmenteile weisen einander paarweise zugewandte randoffene Öffnungen auf, die sich in verbundenem Zustand der Rahmenteile zu geschlossenen Rahmenöffnungen zur Aufnahme der elastomeren Tüllen ergänzen. Die Tüllen sind ihrerseits mit Durchgangsöffnungen für die Kabel versehen, die über elastisch aufweitbare Randschlitze radial von außen her zugänglich sind. Die im Losezustand mit den auf die Kabel aufgesteckten Tüllen bestückten Rahmenteile werden durch Schraubverbindungen unter Zusammenpressen der Tüllen miteinander verbunden. Anschließend werden die auf diese Weise vorkonfektionierten Rahmen im Bereich des Wanddurchbruchs am Schaltschrank so befestigt, dass die einen Kabelenden in das Schaltschrankinnere weisen. Bei den bekannten Kabeldurchführungen wird als nachteilig empfunden, dass die Handhabung der geteilten Rahmen bei der Vormontage relativ aufwendig ist.

Ausgehend hiervon liegt der Erfindung die Aufgabe zugrunde, eine Kabeldurchführungsvorrichtung für Schaltschränke zu entwickeln, die besonders einfach mit Kabeln bestückt und am Schaltschrank montiert werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die efindungsgemäße Lösung besteht im Wesentlichen darin, dass anstelle der geteilten Rahmen eine Halteplatte verwendet wird, die mehrere Plattenöffnungen zur Aufnahme der Tüllen aufweist, die über Randschlitze zum Ein- und Ausführen von Kabeln von außen zugänglich sind, wobei die auf die Kabel aufgesteckten Tüllen in Durchgangsrichtung der Kabel in die Plattenöffnungen einsetzbar und dort fixierbar sind. Da die erfindungsgemäße Halteplatte einteilig ausgebildet ist, ist eine relativ einfache Handhabung bei der Konfektionierung mit Kabeln und Tüllen gewährleistet. Die Halteplatte kann aus einem starren Kunststoffmaterial bestehen. Alternativ hierzu können die Randschlitze der Halteplatte elastisch aufweitbar sein.

Gemäß einer bevorzugten Ausgestaltung der Erfindung besteht die Halteplatte aus einem elastomeren Material. Vorteilhafterweise ist das elastomere Material der Halteplatte härter als das der Tüllen. Zweckmäßig besteht die Halteplatte aus Hartgummi, während die Tüllen aus einem Weichgummi bestehen.

Eine weitere Vereinfachung bei der Vormontage wird dadurch erzielt, dass die Tüllen in die zugehörigen Plattenöffnungen einrastbar sind: Zur Erleichterung der Positionierung der Tüllen innerhalb der Plattenöffnungen ist es von Vorteil, wenn die Plattenöffnungen einen in Durchgangsrichtung konisch oder stufenförmig verjüngten Öffnungsquerschnitt aufweisen. Die Tüllen haben dabei zweckmäßig einen dem Verlauf des Öffnungsquerschnitts entsprechenden konisch oder stufenförmig verjüngten Mantelquerschnitt. Eine weitere Verbesserung in dieser Hinsicht wird dadurch erzielt, dass die Tüllen einen in Durchgangsrichtung konisch oder stufenförmig verjüngten Durchtrittsquerschnitt für die Kabel aufweisen.

Eine weitere bevorzugte Ausgestaltung der Erfindung sieht vor, dass die Tüllen an ihrem durch die zugehörige Plattenöffnung hindurchgreifenden Ende eine den Rand der Plattenöffnung hintergreifende, radial überstehende Rastschulter aufweisen. Im Zuge der Vormontage werden daher die auf die betreffenden Kabel aufgesteckten Tüllen in Durchgangsrichtung in die Plattenöffnungen eingesteckt und darin verrastet.

Um eine Verbesserung der Abdichtung im Bereich der Kabeldurchführung zu erzielen, wird gemäß einer bevorzugten Ausgestaltung der Erfindung vorgeschlagen, dass die Randschlitze durch eine an den Tüllen angeformte Dichtlasche verschließbar sind. Zweckmäßig weist die Halteplatte im Bereich der zu den Plattenöffnungen führenden Randschlitze eine zur vorderen Breitseitenfläche der Halteplatte offene Ausnehmung auf, und die radial über die Tülle überstehende Dichtlasche ist unter Abdeckung des Randschlitzes in die offene Ausnehmung einführbar. Die Tiefe und die Weite der randoffenen Ausnehmung entspricht dabei der Dicke und Breite der Dichtlasche. Vorteilhafterweise ist an der Dichtlasche ein Rastelement angeformt, das den Außenrand der Halteplatte in einem den Randschlitz enthaltenden Bereich hintergreift. Im montierten Zustand sind die Randschlitze der Plattenöffnungen und die Randschlitze der zugehörigen Tüllen in unterschiedlichen radialen Richtungen orientiert. Vorteilhafterweise sind die Randschlitze der Tüllen außerhalb des Bereichs der Dichtlaschen, vorzugsweise diesen diametral gegenüberliegend angeordnet.

Eine weitere bevorzugte Ausgestaltung der Erfindung sieht vor, dass an der Halteplatte ein flanschartig überstehender Außenrand angeformt ist, der im Bereich der Randschlitze unterbrochen ist und der gegen den Durchbruchrand der Wand dichtend anpreßbar ist. Die Befestigung der Halteplatte an der Wand erfolgt zweckmäßig durch Befestigungsmittel, die durch Durchtrittsöffnungen im Außenrand hindurchgreifen. Ein Teil der Befestigungsmittel sind zweckmäßig als Drehriegel ausgebildet, die ein im Verriegelungszustand den Durchbruchrand der Wand hintergreifendes Riegelteil aufweisen. Weiter kann ein Teil der Befestigungsmittel als Kopfschrauben ausgebildet sein, die mit ihrem Schaft durch Durchtrittsöffnungen am Außenrand hindurchgreifen.

Um eine zuverlässige Zugentlastung der durch die Kabeldurchführung hindurchgeführten Kabel zu gewährleisten, wird gemäß einer weiteren vorteilhaften Ausgestaltung der Erfindung vorgeschlagen, dass auf der rückwärtigen Plattenseite im Bereich des Randes der Plattenöffnungen elastisch verbiegbare Zugentlastungslappen überstehen, die vorzugsweise mittels eines Haltebandes gegen ein durchgeführtes Kabel anpreßbar sind.

Vorzugsweise sind die Plattenöffnungen in mindestens zwei Reihen angeordnet, wobei die Plattenöffnungen benachbarter Reihen gegeneinander versetzt angeordnet sind. Dies ermöglicht eine kompakte Bauweise und erlaubt die Durchführung von Kabeln auf einer relativ kleinen Fläche.

Zweckmäßig ist an der Halteplatte ein Rahmen befestigt, der die Randschlitze zumindest teilweise übergreift. Vorzugsweise übergreift der Rahmen teilweise auch die vordere Breitseitenfläche der Halteplatte. Durch diese Maßnahmen werden die in die Halteplatte eingesetzten Tüllen noch besser in der Halteplatte gehalten. Der Rahmen kann aus Metall oder aus Kunststoff gefertigt sein.

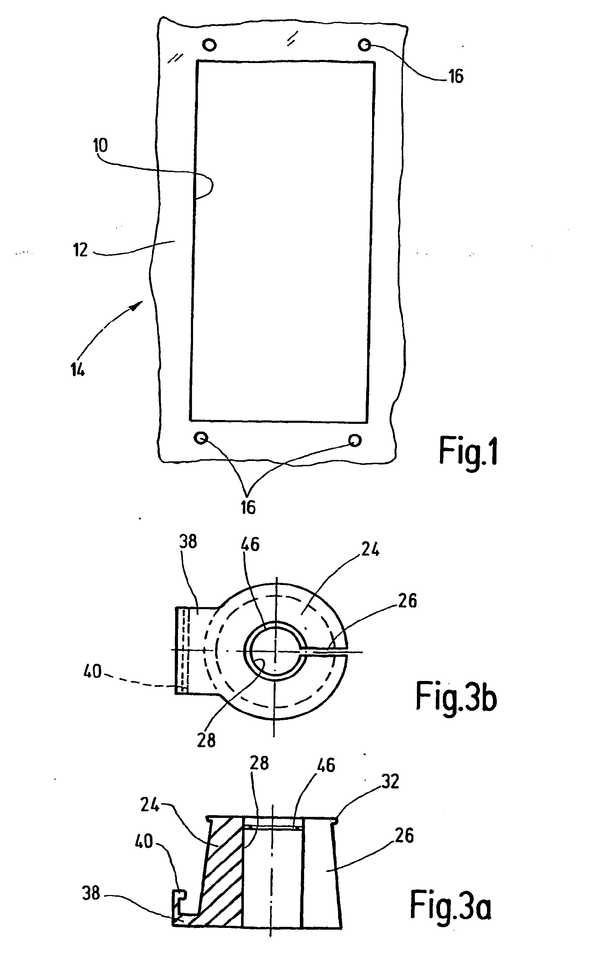

Im Folgenden wird die Erfindung anhand der in der Zeichnung in schematischer Weise dargestellten Ausführungsbeispiele näher erläutert. Es zeigen
- Fig. 1: einen Ausschnitt aus einer Schaltschrankwand mit Wanddurchbruch zur Durchführung von Kabeln;
- Fig. 2a: bis c eine Draufsicht, eine Seitenansicht und einen Schnitt (C-C) einer mit Plattenöffnungen versehenen Halteplatte zur Befestigung im Bereich des Wanddurchbruchs des Schaltschranks nach Fig. 1 gemäß eines ersten Ausführungsbeispiels;
- Fig. 3a: und b eine Draufsicht und einen Schnitt einer in die Plattenöffnungen einsetzbaren Kabeltülle;
- Fig. 4a: und b einen Ausschnitt aus der Halteplatte nach Fig. 2a sowie einen Schnitt durch die Halteplatte mit einem Verriegelungselement;
- Fig. 5a: und b eine Seitenansicht und eine Draufsicht des Verriegelungselements nach Fig. 3;
- Fig. 6a: und b eine Untenansicht und einen Schnitt (B-B) der Halteplatte nach Fig. 2a mit angeformten Zugentlastungslappen;
- Fig. 7a: eine Explosionsdarstellung einer in einen Ausschnitt einer Wand eingesetzten Halteplatte gemäß eines zweiten Ausführungsbeispiels;
- Fig. 7b: eine Frontansicht der Halteplatte gemäß des zweiten Ausführungsbeispiels ohne eingesetzte Tüllen.

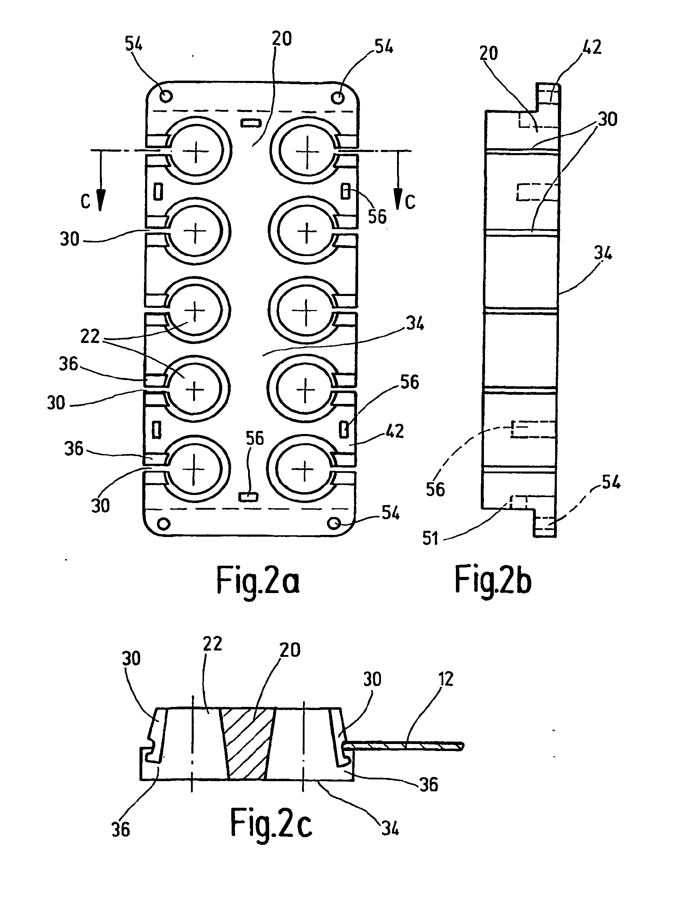

Die in Fig. 2 bis 6 dargestellten Bauteile bilden insgesamt eine Kabeldurchführungsvorrichtung, die für den Einsatz in einen Wanddurchbruch 10 in der Außenwand 12 eines Schaltschranks bestimmt ist. Die Vorrichtung dient dazu, mit Steckeinrichtungen oder dergleichen versehene Kabel 62 durch den Wanddurchbruch 10 hindurch in den Schaltschrank 14 einzuführen, ohne dass die Steckeinrichtungen von den Kabeln gelöst werden müssen. Der Wanddurchbruch 10 ist rechteckig ausgebildet und so groß, dass die Kabel mit den Steckeinrichtungen eingeführt werden können. Die Bohrungen 16 in der Wand 12 sind zur Aufnahme von Befestigungsschrauben bestimmt, mit denen die Kabeldurchführungsvorrichtung im Bereich des Wanddurchbruchs 10 an der Wand 12 fixierbar ist.

Die Kabeldurchführungsvorrichtung 18 weist eine Halteplatte 20 aus Hartgummi auf, die mehrere im Abstand voneinander angeordnete Plattenöffnungen 22 enthält, die zur Aufnahme von Tüllen 24 aus Weichgummi bestimmt sind. Die Tüllen 24 weisen eine über einen elastisch aufweitbaren Randschlitz 26 radial von außen zugängliche Durchgangsöffnung 28 für ein Kabel 62 auf. Der elastisch aufweitbare Randschlitz 26 ermöglicht es, die Tülle an einer beliebigen Stelle auf ein Kabel aufzustecken, so dass dieses durch die Durchgangsöffnung 28 hindurchgreift. Einzelne Tüllen können auch als geschlossene Blindstopfen ausgebildet sein.

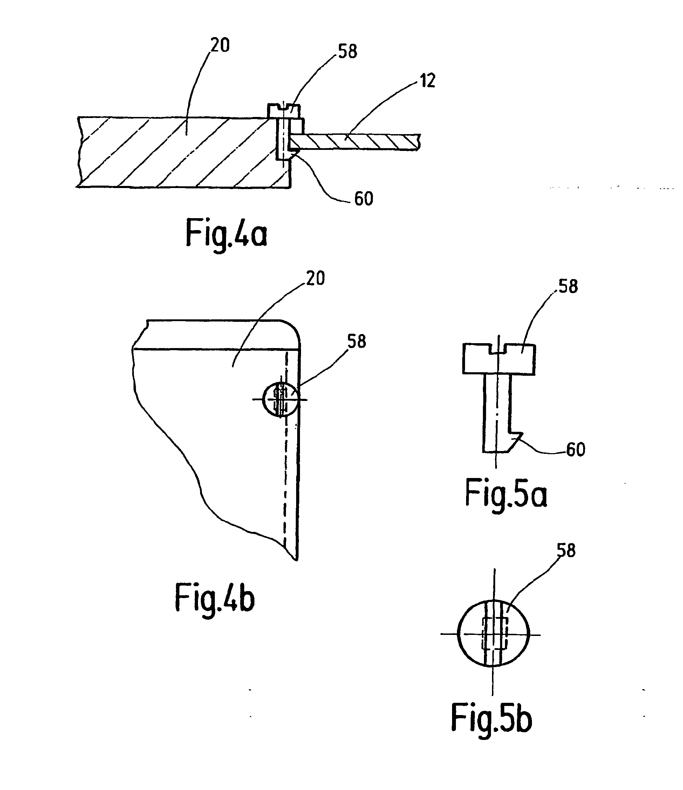

Auch die Plattenöffnungen 22 sind über elastisch aufweitbare Randschlitze 30 zum Ein- und Ausführen von Kabeln von außen her zugänglich. Zum Konfektionieren der Halteplatte 20 mit den Kabeln werden zunächst die Kabel durch die Randschlitze 30 in die zugehörigen Plattenöffnungen 22 eingesetzt und anschließend mit Hilfe einer auf das Kabel aufgesteckten Tülle 24 in der Plattenöffnung 22 gesichert. Dazu werden die Tüllen 24 in Durchgangsrichtung der Kabel in die zugehörigen Plattenöffnungen 22 eingesetzt und dort durch eine Verrastung fixiert. Wie aus den Fig. 2c und 3a zu ersehen ist, weisen die Plattenöffnungen 22 einen in Durchgangsrichtung konisch verjüngten Öffnungsquerschnitt auf, während die Tüllen 24 einen in Durchgangsrichtung entsprechend konisch verjüngten Mantelquerschnitt aufweisen. Dadurch werden die Tüllen beim Eindrücken in die Plattenöffnungen kraftschlüssig mit der Halteplatte 20 verkeilt. Außerdem weisen die Tüllen 24 an ihrem durch die zugehörige Plattenöffnung 22 hindurchgreifenden Ende eine den Rand der Plattenöffnung 22 hintergreifende, radial überstehende Rastschulter 32 auf. Aus den Fig. 2a, c, 3a und b ist ferner zu ersehen, dass die Halteplatte 20 im Bereich der zu den Plattenöffnungen 22 führenden Randschlitze 30 eine zur vorderen Breitseitenfläche 34 der Halteplatte offene Ausnehmung 36 aufweist, in die eine an der zugehörigen Tülle 24 angeformte, radial überstehende Dichtlasche 38 unter Abdeckung des Randschlitzes 30 einführbar ist. An der Dichtlasche ist ein Rastelement 40 angeformt, das im montierten Zustand der Tülle den Plattenaußenrand in einem den Randschlitz 30 enthaltenden Bereich formschlüssig hintergreift. Die Tiefe und die Weite der randoffenen Ausnehmung 36 entspricht der Dicke und Breite der Dichtlasche, so dass sich an der vorderen Breitseitenfläche 34 ein glatter Übergang zwischen Plattenaußenrand 42 und Dichtlasche 38 ergibt. Aus Fig. 3b ist zu ersehen, dass an der Tülle 24 der Randschlitz 26 der Dichtlasche 38 diametral gegenüberliegt. Mit dieser Maßnahme wird erreicht, dass die Randschlitze 26 der Tüllen 24 und die Randschlitze 30 der Halteplatte 20 im montierten Zustand nach unterschiedlichen Richtungen weisen und daher nicht miteinander kommunizieren.

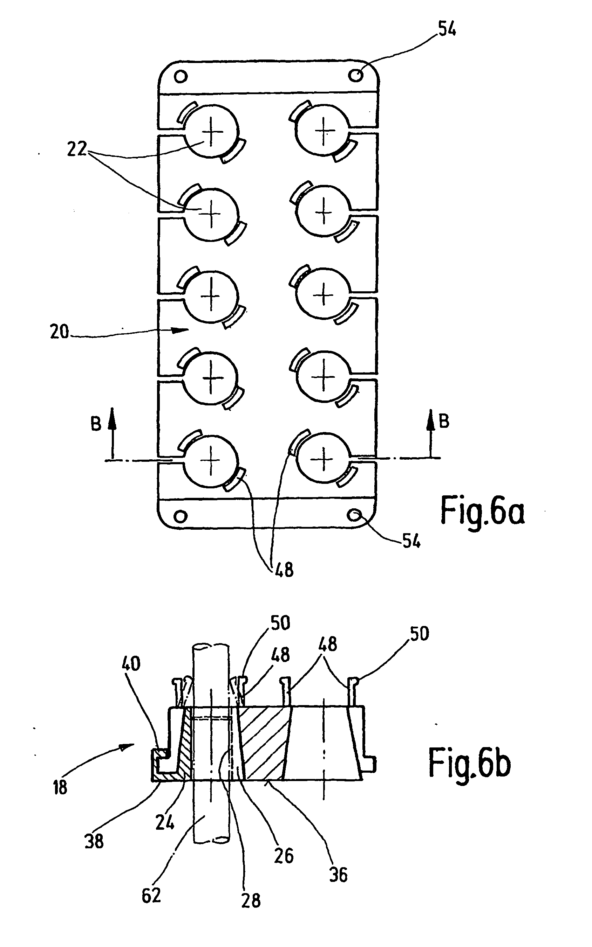

Aus den Fig. 3a und b ergibt sich ferner, dass die Tüllen zum rückwärtigen Ende ihrer. Durchgangsöffnung 28 hin eine den Durchgangsquerschnitt verjüngende Ringstufe 46 aufweisen, die dafür sorgt, dass ein die Tülle 24 durchgreifendes Kabel innerhalb der Durchgangsöffnung 28 dicht umschlossen wird. Wenn die Ringstufe 46 in ihrem Durchgangsquerschnitt Untermaß gegenüber dem Kabeldurchmesser aufweist, stellt sich im montierten Zustand zwischen Kabel 62 und Tülle 24 eine gewisse Zugentlastung ein. Eine weitere Verbesserung der Zugentlastung kann dadurch erzielt werden, dass an der Rückseite der Halteplatte 20 im Randbereich der Plattenöffnungen 22 in Durchtrittsöffnung überstehende Zugentlastungslappen 48 angeformt sind, die mit Hilfe eines nicht dargestellten Haltebandes gegen das durchtretende Kabel anpreßbar sind (Fig. 6a und b). Die Zugentlastungslappen 48 sind an ihrem freien Ende 50 verdickt, so dass das Halteband von den Zugentlastungslappen 48 nicht herunter gleiten kann.

Die Halteplatte 20 weist eine bei der Montage durch den Wanddurchbruch 10 hindurchgreifende Innenpartie 51 auf, an der auf der Seite der vorderen Breitseitenfläche 34 der Außenrand 42 flanschartig übersteht. Der Außenrand 42 übergreift im montierten Zustand den Rand des Wanddurchbruchs 10. An den Schmalseiten weist der Außenrand 42 Bohrungen 54 auf, die im montierten Zustand mit den Bohrungen 16 in der Wand 12 fluchten und für den Durchtritt von Befestigungsschrauben bestimmt sind. Weitere Öffnungen 56 im randnahen Bereich der Halteplatte 20 sind zur Aufnahme von Drehriegeln 58 bestimmt, die zur Fixierung der Halteplatte 20 den Innenrand des Wanddurchbruchs 10 hintergreifende Riegelorgane 60 aufweisen.

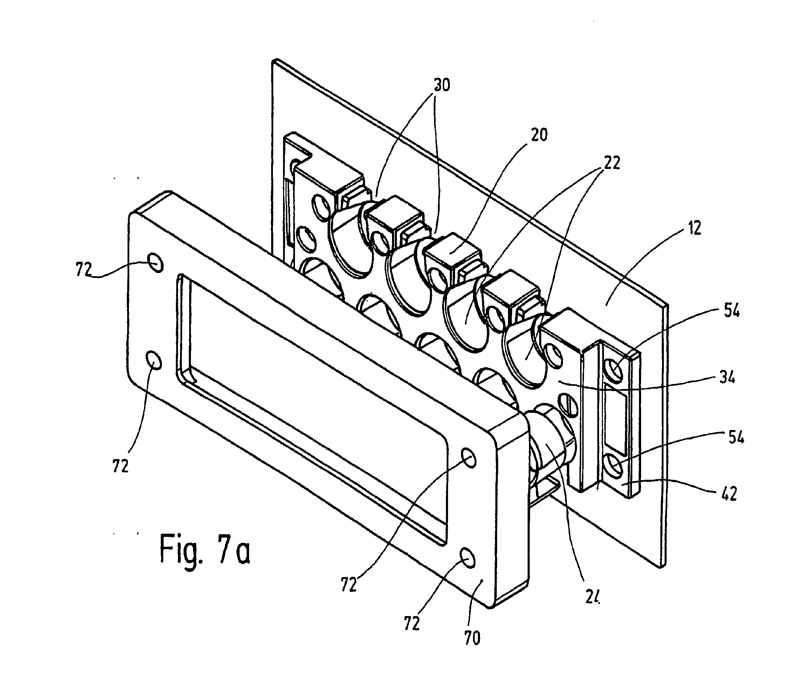

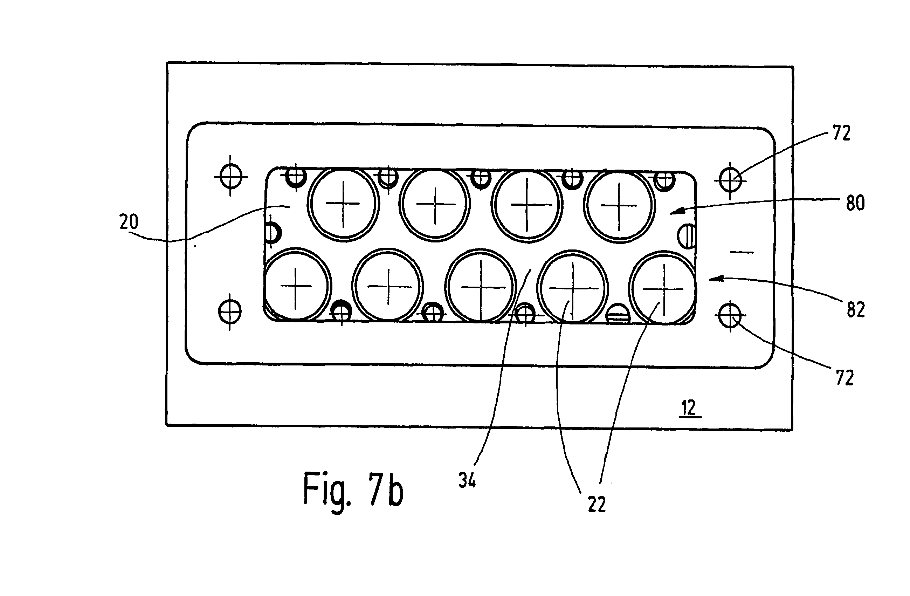

Gemäß einem zweiten Ausführungsbeispiel (Fig. 7a und 7b) steht der Außenrand 42 nicht auf der vorderen Breitseitenfläche 34, sondern auf der hinteren Breitseitenfläche der Halteplatte 20 über. Die Halteplatte 20 ist an der Außenwand 12 befestigt. Beispielhaft ist in Fig. 7a eine Tülle 24 gezeigt, die in die Plattenöffnungen 22 einsetzbar ist. Die Plattenöffnungen 22 sind in zwei übereinanderliegenden Reihen 80, 82 angeordnet. Dabei weist die obere Reihe 80 vier Plattenöffnungen 22 auf, die untere Reihe 82 weist fünf Plattenöffnungen 22 auf. Die Plattenöffnungen 22 der beiden Reihen 80, 82 sind so gegeneinander versetzt angeordnet, dass sich die Plattenöffnungen 22 der oberen Reihe 80 über den Zwischenbereichen zwischen den Plattenöffnungen 22 der unteren Reihe 82 befinden. An der Halteplatte 20 ist ein Rahmen 70 befestigt, der zum einen die Randschlitze 30 übergreift. Zum anderen übergreift der Rahmen 70 auch die vordere Breitseitenfläche 34 der Halteplatte 20 so weit, dass die Dichtlaschen 38 von in die Plattenöffnungen 22 eingesetzten Tüllen 24 vom Rahmen 70 überdeckt und festgehalten werden. Zur Befestigung des Rahmens 70 an der Halteplatte 20 weist der Rahmen 70 Bohrungen 72 auf, die mit den Bohrungen 54 der Halteplatte 20 fluchten und für den Durchtritt von Befestigungsschrauben bestimmt sind.

Zusammenfassend ist folgendes festzuhalten: Die Erfindung bezieht sich auf eine Vorrichtung zum Abdecken und Abdichten eines zur Durchführung von Kabeln bestimmten Wanddurchbruchs 10, beispielsweise in einem Schaltschrank. Die Vorrichtung weist eine am Durchbruchrand der Wand befestigbare Halteplatte 20 und mehrere in Plattenöffnungen 22 lösbar einsetzbare und dort fixierbare Tüllen 24 aus elastomerem Material auf. Zumindest ein Teil der Tüllen ist mit mindestens einer über einen elastisch aufweitbaren Randschlitz 26 radial von außen zugänglichen Durchgangsöffnung 28 für ein Kabel versehen. Um die Kabeldurchführung besonders einfach mit Kabeln bestücken und am Schaltschrank montieren zu können, wird gemäß der Erfindung vorgeschlagen, dass die Plattenöffnungen 22 über Randschlitze 30 zum Ein- und Ausführen von Kabeln von außen zugänglich sind und dass die auf die Kabel aufgesteckten Tüllen 24 in Durchgangsrichtung der Kabel in die Plattenöffnungen 22 einsetzbar und dort fixierbar sind.

## Patentansprüche

1. Vorrichtung zum Abdecken und/oder Abdichten eines zur Durchführung von Kabeln bestimmten Wanddurchbruchs (10) mit einer am Durchbruchrand der Wand (12) befestigbaren Halteplatte (20) und mit mehreren in Plattenöffnungen (22) lösbar einsetzbaren und dort fixierbaren Tüllen (24) aus elastomerem Material, von denen zumindest ein Teil mit mindestens einer über einen elastisch aufweitbaren Randschlitz (26) radial von außen zugänglichen Durchgangsöffnung (28) für ein Kabel. (62) versehen ist, wobei die Plattenöffnungen (22) über Randschlitze (30) zum Ein- und Ausführen von Kabeln von außen zugänglich sind und wobei die Tüllen (24) in Durchgangsrichtung der Kabel in die zugehörigen Plattenöffnungen (22) einsetzbar und dort fixierbar sind.

2. Vorrichtung nach Anspruch 1, **dadurch gekennzeichnet, dass** die Halteplatte aus einem starren Kunststoffmaterial besteht.

3. Vorrichtung nach Anspruch 1 oder 2, **dadurch gekennzeichnet, dass** die Halteplatte (20) aus einem elastomeren Material besteht.

4. Vorrichtung nach Anspruch 3, **dadurch gekennzeichnet, dass** das elastomere Material der Halteplatte (20) härter ist als das Tüllenmaterial.

5. Vorrichtung nach Anspruch 4, **dadurch gekennzeichnet, dass** die Halteplatte (20) aus Hartgummi und die Tüllen (24) aus Weichgummi bestehen.

6. Vorrichtung nach einem der Ansprüche 3 bis 5, **dadurch gekennzeichnet, dass** die Randschlitze (30) der Halteplatte (20) elastisch aufweitbar sind.

7. Vorrichtung nach einem der Ansprüche 1 bis 6, **dadurch gekennzeichnet, dass** zumindest eine der Tüllen (24) als Blindstopfen ausgebildet ist.

8. Vorrichtung nach einem der Ansprüche 1 bis 7, **dadurch gekennzeichnet, dass** die Tüllen (24) in den zugehörigen Plattenöffnungen (22) einrastbar sind.

9. Vorrichtung nach einem der Ansprüche 1 bis 8, **dadurch gekennzeichnet, dass** die Plattenöffnungen (22) einen in Durchgangsrichtung konisch oder stufenförmig verjüngten Öffnungsquerschnitt aufweisen.

10. Vorrichtung nach einem der Ansprüche 1 bis 9, **dadurch gekennzeichnet, dass** die Tüllen (24) einen in Durchgangsrichtung konisch oder stufenförmig verjüngten Mantelquerschnitt aufweisen.

11. Vorrichtung nach einem der Ansprüche 1 bis 10, **dadurch gekennzeichnet, dass** die Tüllen (24) einen in Durchgangsrichtung konisch oder stufenförmig verjüngten Durchgangsquerschnitt aufweisen.

12. Vorrichtung nach einem der Ansprüche 1 bis 11, **dadurch gekennzeichnet, dass** die Tüllen (24) an ihrem durch die zugehörige Plattenöffnung (22) hindurchgreifenden Ende (44) eine den Rand der Plattenöffnung hintergreifende, radial überstehende Rastschulter (32) aufweisen.

13. Vorrichtung nach einem der Ansprüche 1 bis 12, **dadurch gekennzeichnet, dass** die Randschlitze (30) durch eine an den Tüllen (24) angeformte Dichtlasche (38) verschließbar sind.

14. Vorrichtung nach einem der Ansprüche 1 bis 13, **dadurch gekennzeichnet, dass** die Halteplatte (20) im Bereich der zu den Plattenöffnungen (22) führenden Randschlitze (30) eine zur vorderen Breitseitenfläche (34) der Halteplatte (20) offene Ausnehmung aufweist, und dass die Dichtlasche (38) radial über die Tülle (24) übersteht und unter Abdeckung des Randschlitzes (30) in die offene Ausnehmung einführbar ist.

15. Vorrichtung nach Anspruch 13 oder 14, **dadurch gekennzeichnet, dass** an der Dichtlasche (38) ein Rastelement (40) angeformt ist, das den Außenrand (42) der Halteplatte (20) in einem den Randschlitz (30) enthaltenden Bereich hintergreift.

16. Vorrichtung nach einem der Ansprüche 1 bis 15, **dadurch gekennzeichnet, dass** die Randschlitze (30) der Plattenöffnungen (22) und die Randschlitze (26) der zugehörigen Tüllen (24) im montierten Zustand in unterschiedlichen radialen Richtungen ausgerichtet sind.

17. Vorrichtung nach einem der Ansprüche 1 bis 16, **dadurch gekennzeichnet, dass** der Randschlitz (26) der Tüllen (24) außerhalb des Bereichs der Dichtlasche (38) angeordnet ist.

18. Vorrichtung nach Anspruch 17, **dadurch gekennzeichnet, dass** der Randschlitz (26) der Tüllen (24) der Dichtlasche (38) diametral gegenüberliegt.

19. Vorrichtung nach einem der Ansprüche 1 bis 18, **dadurch gekennzeichnet, dass** an der Halteplatte (20) ein flanschartig überstehender Außenrand- (42) angeformt ist, der im Bereich der Randschlitze (30) unterbrochen ist und der gegen den Durchbruchrand der Wand (12) dichtend anpreßbar ist.

20. Vorrichtung nach Anspruch 19, **dadurch gekennzeichnet, dass** im Außenrand (42) Durchtrittsöffnungen (54,56) für Befestigungsmittel (58) angeordnet sind.

21. Vorrichtung nach Anspruch 20, **dadurch gekennzeichnet, dass** ein Teil der Befestigungsmittel als Drehriegel (58) ausgebildet sind, die ein im Verriegelungszustand den Durchbruchrand der Wand (12) hintergreifendes Riegelteil (60) aufweisen.

22. Vorrichtung nach Anspruch 20 oder 21, **dadurch gekennzeichnet, dass** ein Teil der Befestigungsmittel als Kopfschrauben ausgebildet sind.

23. Vorrichtung nach einem der Ansprüche 1 bis 22, **gekennzeichnet durch** auf der Rückseite der Halteplatte im Randbereich der Plattenöffnungen (22) in Durchtrittsöffnung überstehende, elastisch verbiegbare, gegen ein durchgeführtes Kabel (62) mittels eines Haltebandes anpreßbare Zugentlastungslappen (48).

24. Vorrichtung nach einem der Ansprüche 1 bis 23, **dadurch gekennzeichnet, dass** die Plattenöffnungen (22) in mindestens zwei Reihen (80, 82) angeordnet sind, wobei die Plattenöffnungen (22) benachbarter Reihen (80, 82) gegeneinander versetzt angeordnet sind.

25. Vorrichtung nach einem der Ansprüche 1 bis 24, **gekennzeichnet durch** einen an der Halteplatte lösbar befestigten, die Randschlitze (30) zumindest teilweise übergreifenden Rahmen (70).

26. Vorrichtung nach Anspruch 25, **dadurch gekennzeichnet, dass** der Rahmen (70) die vordere Breitseitenfläche (34) der Halteplatte (20) teilweise übergreift.

## Claims

1. Device for masking and/or sealing a wall opening (10) intended for the feeding-through of cables, said device having a holding plate (20) which can be fastened to the edge of the opening in the wall (12), and a number of bushes (24) made of elastomeric material which can be detachably inserted in apertures (22) in said plate and fixed therein, and at least some of which are provided with at least one through-aperture (28) for a cable (62), which aperture is accessible radially from outside via an elastically expandable marginal slit (26), wherein the apertures (22) in the plate are accessible from outside via marginal slits (30) for the purpose of feeding cables in and out, and wherein the bushes (24) can be inserted in the appertaining apertures (22) in the plate in the direction in which the cables pass through, and can be fixed therein.

2. Device according to Claim 1,
**characterised in that** the holding plate consists of a rigid plastic material.

3. Device according to Claim 1 or 2,
**characterised in that** the holding plate (20) consists of an elastomeric material.

4. Device according to Claim 3,
**characterised in that** the elastomeric material of the holding plate (20) is harder than the material of the bushes.

5. Device according to Claim 4,
**characterised in that** the holding plate (20) consists of hard rubber, and the bushes (24) consist of soft rubber.

6. Device according to one of Claims 3 to 5,
**characterised in that** the marginal slits (30) in the holding plate (20) are elastically expandable.

7. Device according to one of Claims 1 to 6,
**characterised in that** at least one of the bushes (24) is constructed as a blind plug.

8. Device according to one of Claims 1 to 7,
**characterised in that** the bushes (24) can be latched into the appertaining apertures (22) in the plate.

9. Device according to one of Claims 1 to 8,
**characterised in that** the apertures (22) in the plate have a cross-section which is tapered in a conical or step-shaped manner in the direction of passage.

10. Device according to one of Claims 1 to 9,
**characterised in that** the bushes (24) have a cross-section of their outer surface which is tapered in a conical or step-shaped manner in the direction of passage.

11. Device according to one of Claims 1 to 10,
**characterised in that** the bushes (24) have a cross-section of passage which is tapered in a conical or step-shaped manner in the direction of passage.

12. Device according to one of Claims 1 to 11,
**characterised in that** the bushes (24) have, at their end (44) that engages through the appertaining aperture (22) in the plate, a radially projecting latching shoulder (32) which engages behind the edge of said aperture in the plate.

13. Device according to one of Claims 1 to 12,
**characterised in that** the marginal slits (30) can be occluded by a sealing flap (38) moulded onto the bushes (24).

14. Device according to one of Claims 1 to 13,
**characterised in that** the holding plate (20) has, in the region of the marginal slits (30) leading to the apertures (22) in the plate, a recess which is open towards the front broad-side face (34) of the holding plate (20), and that the sealing flap (38) projects radially above the bush (24) and can be fed into the open recess, masking the marginal slit (30) in the process.

15. Device according to Claim 13 or 14,
**characterised in that** a latching element (40), which engages behind the outer edge (42) of the holding plate (20) in a region that contains the marginal slit (30), is moulded onto the sealing flap (38).

16. Device according to one of Claims 1 to 15,
**characterised in that** the marginal slits (30) in the apertures (22) in the plate and the marginal slits (26) in the appertaining bushes (24) are orientated in different radial directions when in the mounted condition.

17. Device according to one of Claims 1 to 16,
**characterised in that** the marginal slit (26) in the bushes (24) is disposed outside the region of the sealing flap (38).

18. Device according to Claim 17,
**characterised in that** the marginal slit (26) in the bushes (24) lies diametrically opposite the sealing flap (38).

19. Device according to one of Claims 1 to 18,
**characterised in that** there is moulded onto the holding plate (20) an outer edge (42) which projects in a flange-like manner and which is interrupted in the region of the marginal slits (30) and can be pressed, in a sealing manner, against the edge of the opening in the wall (12).

20. Device according to Claim 19,
**characterised in that** apertures (54, 56) for fastening means (58) to pass through are disposed in the outer edge (42).

21. Device according to Claim 20,
**characterised in that** some of the fastening means are constructed as turn-bolts (58) which have a bolt part (60) which, in the locking condition, engages behind the edge of the opening in the wall (12).

22. Device according to Claim 20 or 21,
**characterised in that** some of the fastening means are constructed as screws with heads.

23. Device according to one of Claims 1 to 22,
**characterised by** elastically deformable traction-relieving tongues (48), which project into the pass-through aperture on the rear side of the holding plate in the region of the edge of the apertures (22) in said plate and can be pressed, by means of a holding strip, against a cable (62) which has been fed through.

24. Device according to one of Claims 1 to 23,
**characterised in that** the apertures (22) in the plate are disposed in at least two rows (80, 82), the apertures (22) in adjoining rows (80, 82) being disposed so as to be offset against one another.

25. Device according to one of Claims 1 to 24,
**characterised by** a frame (70) which is detachably fastened to the holding plate and engages, at least partially, over the marginal slits (30).

26. Device according to Claim 25,
**characterised in that** the frame (70) partially engages over the front broad-side face (34) of the holding plate (20).

## Revendications

1. Dispositif pour recouvrir et/ou calfeutrer un percement de paroi (10) destiné au passage de câbles, avec une plaque de maintien (20) pouvant être fixée sur le bord du percement de la paroi (12), et avec plusieurs douilles (24) en matériau élastomère qui peuvent être insérées de manière amovible dans des ouvertures (22) de la plaque et y être fixées en position et dont au moins une partie est pourvue d'au moins une ouverture de passage (28) pour un câble (62), laquelle est accessible radialement de l'extérieur par l'intermédiaire d'une fente de bord (26) pouvant être élastiquement élargie, sachant que les ouvertures (22) de la plaque sont accessibles de l'extérieur par l'intermédiaire de fentes de bord (30) pour faire entrer et sortir des câbles, et sachant que les douilles (24) peuvent être insérées dans la direction de passage des câbles dans les ouvertures associées (22) de la plaque, et y être fixées en position.

2. Dispositif selon la revendication 1, **caractérisé en ce que** la plaque de maintien est constituée d'une matière plastique rigide.

3. Dispositif selon la revendication 1 ou 2, **caractérisé en ce que** la plaque de maintien (20) est constituée d'un matériau élastomère.

4. Dispositif selon la revendication 3, **caractérisé en ce que** le matériau élastomère de la plaque de maintien (20) est plus dur que le matériau des douilles.

5. Dispositif selon la revendication 4, **caractérisé en ce que** la plaque de maintien (20) est constituée de caoutchouc dur et les douilles (24) de caoutchouc tendre.

6. Dispositif selon l'une des revendications 3 à 5, **caractérisé en ce que** les fentes de bord (30) de la plaque de maintien (20) peuvent être élastiquement élargies.

7. Dispositif selon l'une des revendications 1 à 6, **caractérisé en ce qu'**au moins une des douilles (24) est réalisée sous forme de bouchon d'obturation.

8. Dispositif selon l'une des revendications 1 à 7, **caractérisé en ce que** les douilles (24) peuvent être enclenchées dans les ouvertures associées (22) de la plaque.

9. Dispositif selon l'une des revendications 1 à 8, **caractérisé en ce que** les ouvertures (22) de la plaque présentent une section d'ouverture rétrécie coniquement ou en gradins dans la direction de passage.

10. Dispositif selon l'une des revendications 1 à 9, **caractérisé en ce que** les douilles (24) présentent une section d'enveloppe rétrécie coniquement ou en gradins dans la direction de passage.

11. Dispositif selon l'une des revendications 1 à 10, **caractérisé en ce que** les douilles (24) présentent une section de passage rétrécie coniquement ou en gradins dans la direction de passage.

12. Dispositif selon l'une des revendications 1 à 11, **caractérisé en ce que** les douilles présentent, à leur extrémité (44) traversant l'ouverture associée (22) de la plaque, un épaulement d'enclenchement (32) radialement saillant qui s'engage derrière le bord de l'ouverture de la plaque.

13. Dispositif selon l'une des revendications 1 à 12, **caractérisé en ce que** les fentes de bord (30) peuvent être fermées par une languette d'étanchéité (38) formée sur les douilles (24).

14. Dispositif selon l'une des revendications 1 à 13, **caractérisé en ce que** la plaque de maintien (20) présente, dans la région des fentes de bord (30) menant aux ouvertures (22) de la plaque, un évidement ouvert vers la surface avant (34) du grand côté de la plaque de maintien (20), et **en ce que** la languette d'étanchéité (38) dépasse radialement de la douille (24) et peut être introduite dans l'évidement ouvert en recouvrant la fente de bord (30).

15. Dispositif selon la revendication 13 ou 14, **caractérisé en ce qu'**un élément d'enclenchement (40) est formé sur la languette d'étanchéité (38), élément qui s'engage derrière le bord extérieur (42) de la plaque de maintien (20) dans une région contenant la fente de bord (30).

16. Dispositif selon l'une des revendications 1 à 15, **caractérisé en ce que** les fentes de bord (30) des ouvertures (22) de la plaque et les fentes de bord (26) des douilles associées (24) sont, dans l'état monté, orientées dans des directions radiales différentes.

17. Dispositif selon l'une des revendications 1 à 16, **caractérisé en ce que** la fente de bord (26) des douilles (24) est disposée en dehors de la région de la languette d'étanchéité (38).

18. Dispositif selon la revendication 17, **caractérisé en ce que** la fente de bord (26) des douilles (24) est diamétralement opposée à la languette d'étanchéité (38).

19. Dispositif selon l'une des revendications 1 à 18, **caractérisé en ce qu'**un bord extérieur (42) saillant à la manière d'une bordure est formé sur la plaque de maintien (20), bord qui est interrompu dans la région des fentes de bord (30) et qui peut être pressé jointivement contre le bord du percement de la paroi (12).

20. Dispositif selon la revendication 19, **caractérisé en ce que** des ouvertures de passage (54, 56) pour des moyens de fixation (58) sont disposées dans le bord extérieur (42).

21. Dispositif selon la revendication 20, **caractérisé en ce que** les moyens de fixation sont réalisés, pour une partie d'entre eux, sous la forme de verrous tournants (58) qui présentent un élément formant verrou (60) qui, dans l'état verrouillé, s'engage derrière le bord du percement de la paroi (12).

22. Dispositif selon la revendication 20 ou 21, **caractérisé en ce que** les moyens de fixation sont réalisés, pour une partie d'entre eux, sous la forme de vis à tête.

23. Dispositif selon l'une des revendications 1 à 22, **caractérisé par** une patte (48) de décharge de traction dépassant dans l'ouverture de passage sur le côté arrière de la plaque dans la région de bord des ouvertures (22) de la plaque, élastiquement déformable et pouvant être pressée au moyen d'une bande de maintien contre un câble (62) passé à travers l'ouverture.

24. Dispositif selon l'une des revendications 1 à 23, **caractérisé en ce que** les ouvertures (22) de la plaque sont disposées en au moins deux rangées (80, 82), sachant que les ouvertures (22) de rangées (80, 82) voisines sont disposées en étant mutuellement décalées.

25. Dispositif selon l'une des revendications 1 à 24, **caractérisé par** un cadre (70) qui est fixé de manière amovible sur la plaque de maintien et qui recouvre au moins partiellement les fentes de bord (30).

26. Dispositif selon la revendication 25, **caractérisé en ce que** le cadre (70) recouvre partiellement la surface avant (34) du grand côté de la plaque de maintien (20).
